# EUROPÄISCHE PATENTSCHRIFT

(11) **EP 1 671 868 B1**
(45) Veröffentlichungstag und Bekanntmachung des Hinweises auf die Patenterteilung: **14.11.2007**
(21) Anmeldenummer: 05026346.6
(22) Anmeldetag: 02.12.2005
(51) Int. Cl.: B62B 3/18

(54) **Einkaufswagen für die Verwendung in Baumärkten**
Shopping trolley for use in DIY superstores
Chariot d'achat pour marchés du bâtiment

(30) Priorität: 14.12.2004 DE 202004019304 U
(43) Veröffentlichungstag der Anmeldung: 21.06.2006
(73) Patentinhaber: Wanzl Metallwarenfabrik GmbH, 89336 Leipheim (DE)
(72) Erfinder: Blaha, Martin, 89335 Ichenhausen / Hochwang (DE)

(56) Entgegenhaltungen:
- EP-A2- 0 340 386
- DE-A1- 4 032 868
- DE-U- 7 533 385
- DE-U1- 29 918 506

## Beschreibung

Die Erfindung betrifft einen Einkaufswagen für die Verwendung in Baumärkten, mit einem Fahrgestell, das einen Korb trägt, mit einer Schiebeeinrichtung und mit einer seitlich am Korb befindlichen Stützeinrichtung zum Tragen von Platten in hochkant abgestellter Lage, wobei die Stützeinrichtung einen nach oben sich erstreckenden, in einem Abstand zum Korb angeordneten Anschlag sowie eine in Schieberichtung des Einkaufswagens geneigt angeordnete Stellfläche aufweist, die zusammen mit einem an der Vorderseite des Fahrgestelles befindlichen Stützabschnitt eine Stellflächenanordnung zum Abstellen der Platten bildet.

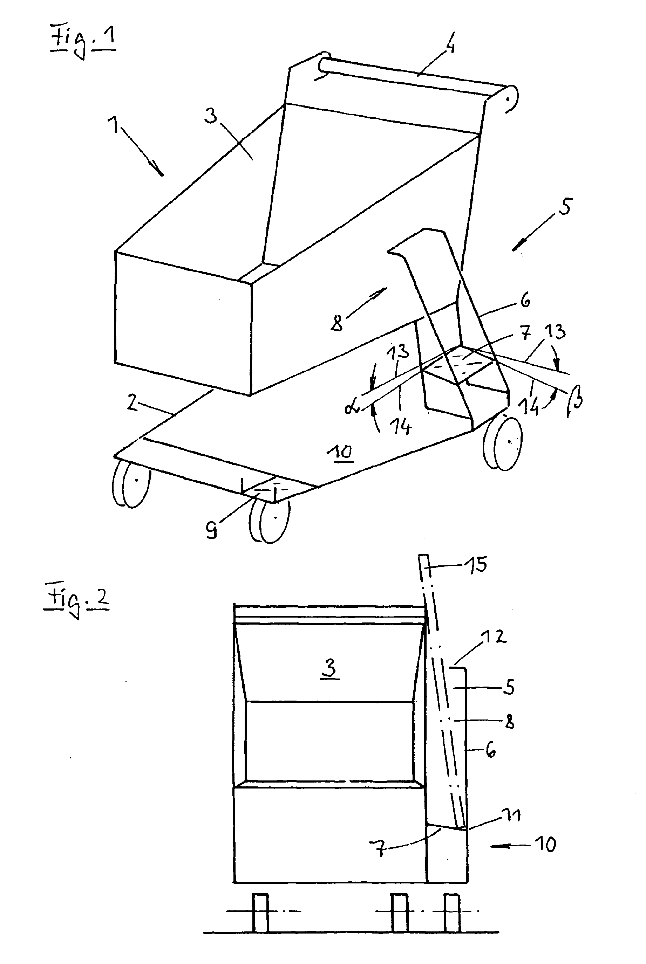

Ein Einkaufswagen dieser Art ist in der DE 75 33 385 U1 und in der EP 0 340 386 A2 beschrieben. Anwendung finden Wagen dieser Art in Baumärkten, wobei sich zeigt, dass Wagen zum seitlichen Kippen dann neigen können, wenn eine oder mehrere hochkant abgestellte Platten am Anschlag der Stützeinrichtung anliegen. Orientiert man sich an der Zeichnung Figur 1 des oben genannten Schutzrechtes, erkennt man die Ursache des eben geschilderten Nachteiles. Die in der Zeichnung mit den Positionszahlen 6 dargestellten Stellflächenabschnitte befinden sich jeweils auf einer horizontalen Ebene so dass es, je nachdem wie man Platten auf der Stützeinrichtung abstellt, vorkommen kann, dass sich die Platten am nach oben gerichteten Anschlag abstützen und so die Kippgefahr des Einkaufswagens erhöhen.

Es ist Aufgabe der Erfindung, bei einem Einkaufswagen der hier vorliegenden Art die Stützeinrichtung so zu gestalten, dass Platten, die hochkant auf der Stützeinrichtung abgestellt werden, immer bestrebt sind, von selbst eine zum Korb hin geneigte Lage einzunehmen.

Die Lösung der Aufgabe besteht darin, dass die Stellfläche der Stützeinrichtung zusätzlich zum Anschlag hin geneigt angeordnet ist.

Die eben beschriebene Anordnung ermöglicht es, dass auf der Stützeinrichtung hochkant abgestellte Platten bevorzugt eine zum Korb hin geneigte Lage einnehmen, so dass der gemeinsame Schwerpunkt, die Standsicherheit des beladenen Einkaufswagens betreffend, eine günstigere Lage einnimmt als dies bei den zum Stand der Technik zählenden Einkaufswagen der Fall ist. Je nachdem wie groß die lichte Weite der Stützeinrichtung gewählt ist, kann es zweckdienlich sein, wenn der Anschlag der Stützeinrichtung an seinem oberen Ende einen zum Korb hin gerichteten Vorsprung aufweist, der ebenfalls dazu beiträgt, dass in der Stützeinrichtung befindliche Platten die zum Korb hin geneigte Lage einnehmen.

Die Erfindung wird anhand eines Ausführungsbeispieles näher erläutert. Es zeigt
Fig. 1 einen Einkaufswagen in räumlicher Darstellung sowie
Fig. 2 den gleichen Einkaufswagen in Vorderansicht und mit einer Platte beladen.

Die Erfindung orientiert sich an jenem Einkaufswagen, wie dieser in der DE 75 33 385 U1 beschrieben ist. Es wird deshalb nachfolgend auf eine nähere Beschreibung all jener technischen Merkmale verzichtet, die durch das genannte Gebrauchsmuster bereits bekannt sind.

Fig. 1 zeigt einen Einkaufswagen 1, der für die Verwendung in Baumärkten vorgesehen ist. Der Einkaufswagen 1 weist ein Fahrgestell 2 auf, das einen Korb 3 trägt. Es ist eine Schiebeeinrichtung 4 vorgesehen. Seitlich am Korb 3 befindet sich eine Stützeinrichtung 5, die zum Tragen oder Abstellen von Platten 15 in hochkant angeordneter Lage bestimmt ist. Die Stützeinrichtung 5 weist einen nach oben sich erstreckenden, vom Fahrgestell 2 ausgehenden Anschlag 6 auf, der in einem Abstand zum Korb 3 angeordnet ist. Der zwischen dem Anschlag 6 und dem Korb 3 gebildete Zwischenraum 8 wird von einer beispielsweise aus Blech gefertigten Stellfläche 7 durchmessen, die zum einen nach vorne, also in Schieberichtung (Pfeil) des Einkaufswagens 1 geneigt angeordnet ist und andererseits auch eine zum Anschlag 6 hin geneigte Lage einnimmt. Zur besseren Darstellung sind zwei kreuzweise angeordnete, horizontal verlaufende Linien 13 eingezeichnet sowie Linien 14 dargestellt, welche die beiden Neigungen der Stellfläche 7 darstellen sollen. Durch den Winkel α wird die in Schieberichtung des Einkaufswagens 1 geneigte Lage ersichtlich, während der Winkel β die zum Anschlag 6 hin geneigte Lage der Stellfläche 7 vermittelt. An der Vorderseite des Fahrgestelles 2 befindet sich ein Stützabschnitt 9, der zusammen mit der Stellfläche 7 eine Stellflächenanordnung 10 zum Abstellen von Platten 15 bildet.

Fig. 2 zeigt den in Fig. 1 beschriebenen Einkaufswagen 1 in einer Vorderansicht. Es ist strichpunktiert eine auf der Stellflächenanordnung 10 hochkant abgestellte Platte 15 strichpunktiert eingezeichnet. Durch die zum Anschlag 6 hin geneigte Lage der Stellfläche 7 sucht die Platte 15 von selbst eine stabile Lage auf, indem sie, bedingt durch die Neigung der Stellfläche 7, durch den Anschlag 6 und durch die Ste lfläche 7 gebildete Eck 11 rutscht. Begünstigt wird dieser Vorgang zusätzlich, wenn am oberen Ende des Anschlages 6 noch ein zum Korb 3 gerichteter Vorsprung 12 vorgesehen ist, der den zwischen dem Anschlag 6 und dem Korb 3 befindlichen Zwischenraum 8 verringert. Durch diese Maßnahme ist die Platte 15 bestrebt, jene Lage einzunehmen, in der sie am Korb 3 und nicht am Anschlag 6 anliegt.

## Patentansprüche

1. Einkaufswagen (1) für die Verwendung in Baumärkten, mit einem Fahrgestell (2), das einen Korb (3) trägt, mit einer Schiebeeinrichtung (4) und mit einer seitlich am Korb (3) befindlichen Stützeinrichtung (5) zum Tragen von Platten (15) in hochkant abgestellter Lage, wobei die Stützeinrichtung (5) einen nach oben sich erstreckenden, in einem Abstand zum Korb (3) angeordneten Anschlag (6) sowie eine in Schieberichtung des Einkaufswagens (1) geneigt angeordnete Stellfläche (7) aufweist, die zusammen mit einem an der Vorderseite des Fahrgestelles (2) befindlichen Stützabschnitt (9) eine Stellflächenanordnung (10) zum Abstellen der Platten (15) bildet, **dadurch gekennzeichnet, dass** die Stellfläche (7) zusätzlich zum Anschlag (6) hin geneigt angeordnet ist.

2. Einkaufswagen nach Anspruch 1, **dadurch gekennzeichnet, dass** am oberen Ende des Anschlages (6) ein zum Korb (3) hin gerichteter Vorsprung (12) vorgesehen ist.

## Claims

1. A shopping trolley (1) for use in DIY stores, having a wheel frame (2) which bears a basket (3), having a pushing arrangement (4) and having a supporting arrangement (5), laterally located on the basket (3), to bear panels (15) placed in an upright position, wherein the supporting arrangement (5) has an upwardly-extending stop (6) arranged at a distance from the basket (3) and also a stand (7) arranged inclined in the advancing direction of the shopping trolley (1), which stand (7), together with a supporting portion (9) located at the front of the wheel frame (2), forms a stand arrangement (10) for setting down the panels (15), **characterised in that** the stand (7) is additionally arranged so as to be inclined towards the stop (6).

2. A shopping trolley according to claim 1, **characterised in that** a projection (12) directed towards the basket (3) is provided at the upper end of the stop (6).

## Revendications

1. Chariot de libre service (1) destiné à être utilisé dans des grandes surfaces de bricolage, comprenant un châssis (2) portant une corbeille (3), une poignée (4) et un support (5) situé latéralement à la corbeille (3) et destiné à recevoir des panneaux (15) posés sur chant, le support (5) présentant un arceau de retenue (6) s'étendant vers le haut et placé à distance de la corbeille (3) et une surface de dépose (7) inclinée s'étendant dans la direction de déplacement du chariot (1), qui forme avec un segment d'appui (9) situé à l'avant du châssis (2) une zone de dépose (10) destinée à recevoir les panneaux (15), **caractérisé en ce que** la surface de dépose (7) est en outre disposée de manière inclinée vers l'arceau de retenue (6).

2. Chariot de supermarché selon la revendication 1, **caractérisé en ce qu'**une saillie (12) pointant vers la corbeille (3) est prévue à l'extrémité supérieure de l'arceau de retenue (6).
